# EUROPEAN PATENT SPECIFICATION

(11) **EP 4 563 934 B1**
(45) Date of publication and mention of the grant of the patent: **10.12.2025**
(21) Application number: 24178971.8
(22) Date of filing: 30.05.2024
(51) Int. Cl.: G01B 5/00, G01B 11/275

(54) **FOUR-WHEEL ALIGNMENT MEASURING DEVICE AND FOUR-WHEEL ALIGNMENT APPARATUS**
VIERRAD-AUSRICHTUNGSMESSVORRICHTUNG UND VIERRAD-AUSRICHTUNGSVORRICHTUNG
DISPOSITIF DE MESURE D'ALIGNEMENT À QUATRE ROUES ET APPAREIL D'ALIGNEMENT À QUATRE ROUES

(30) Priority: 29.11.2023 CN 202311625567
(43) Date of publication of application: 04.06.2025
(73) Proprietor: Shenzhen Smartsafe Tech Co., Ltd., Shenzhen, Guangdong 518000 (CN)
(72) Inventor: ZHAN, Wei, Shenzhen, 518000 (CN); WANG, Qingwei, Shenzhen, 518000 (CN)
(74) Representative: Patentwerk B.V.

(56) References cited:
- EP-A1- 3 425 327
- EP-B1- 4 012 328
- US-A1- 2004 039 544
- US-A1- 2010 302 558
- US-B1- 6 657 711

## Description

### TECHNICAL FIELD

The present application relates to the technical field of four-wheel alignment apparatus, and in particular, to a four-wheel alignment measuring device and a four-wheel alignment apparatus.

### BACKGROUND

The installation between a wheel with the steering system, steering knuckle and front axle of the vehicle has a relative position. This installation with the relative position is known as front-end alignment, also known as front wheel alignment. Front wheel alignment includes kingpin caster (angle), kingpin inclination (angle), front wheel camber (angle) and front wheel toe-in. This is for steering with the two front wheels. For the two rear wheels, there is also a relative position of the installation with the rear axle, which is known as rear wheel alignment. Rear wheel alignment includes wheel camber (angle) and each rear wheel toe-in. This front wheel alignment and rear wheel alignment together are known as four-wheel alignment.

The existing four-wheel alignment apparatus measures the relative position and inclination angle of the tires through the four-wheel alignment measuring device, and then obtains the parameters of the four tires to analyze the wheel alignment information. The camera device and laser device on the conventional four-wheel alignment measuring device usually need to maintain a predetermined distance from the tire to obtain measurements. The camera device and laser device are connected to the lift carrying the vehicle through a connector. The center of gravity of the support rod and camera device deviate relatively far away from the tire, thus it is easy to cause the entire four-wheel alignment measuring device to turn over, thereby causing damage to the four-wheel alignment measuring device.

A US patent application US20040039544A1 disclosed apparatus and methods are provided for measuring vehicle wheel alignment characteristics. According to one embodiment, during a first measurement cycle, spatial coordinates of multiple points on the wheel are obtained by positioning a vision sensor at various angular offsets relative to the wheel, the multiple points representative of samples from each of the various angular offsets. After the first measurement cycle and before the second measurement cycle, the wheel is rotated at least a partial revolution. During the second measurement cycle, spatial coordinates of multiple points on the wheel are obtained by positioning the vision sensor at various angular offsets relative to the wheel, the multiple points representative of samples from each of the various angular offsets. Finally, one or more characteristics of the wheel are determined based upon the spatial coordinates collected during the first measurement cycle and the spatial coordinates collected during the second measurement cycle.

A US patent application US6657711B1 disclosed an apparatus for measuring the dynamic characteristics of the vehicle wheel alignment in non-contact fashion with high accuracy is disclosed. A laser light source (4) emits a laser beam of a predetermined geometric pattern toward the wheel side surface. A laser beam control device (6) controls the width of the laser beam in such a manner as to be radiated only in a predetermined range of the wheel side surface. Two laser light sources (120), (121) emit non-parallel laser beams. A photdetecting device (122) receives the two laser beams and converts them to two corresponding image data. A processing unit calculates the distance between the two images based on the two image data and calculates the wheel alignment based on the same distance.

A US patent application US20100302558A1 disclosed a sensor system and method for analyzing a feature in a sensing volume is provided. The system receives image data from a sensor, where the image data including peaks corresponding to the intersection of laser lines with the feature. The system generates a dynamic window based on the entropy of the peaks.

A EP patent application EP4012328B1 disclosed an optical scanning system for measuring and/or controlling a vehicle and/or parts of a vehicle, wherein the vehicle is arranged on a support surface. The optical scanning system comprises two optical reader apparatuses, which are arranged on said support surface, on opposite sides of the vehicle, and are provided with respective optical image capturing devices configured to provide respective data/signals encoding one or more images of the vehicle, an electronic system, which is designed to process the data/signals in order to construct one or more three-dimensional images of the vehicle. The optical image reader apparatuses each comprise a calibration target, which lies on an approximately horizontal support surface and is arranged immediately adjacent to the optical image capturing device of the relative optical image reader apparatus at a predetermined distance from it.

A EP patent application EP3425327A1 disclosed a method for determining wheel alignment parameters of a vehicle wheel arrangement. More particularly, when performing the method, a light pattern is projected on a surface of the vehicle wheel arrangement, whereby an image of the light pattern is acquired for determining the wheel alignment parameter.

### SUMMARY

An objective of the present application is to provide a four-wheel alignment measuring device and a four-wheel alignment apparatus to solve the problem that the center of gravity of the existing four-wheel alignment measuring device deviates too far from the tire to be measured and easily causes flipping of the device, thereby causing damage to the four-wheel alignment measuring device.

In order to achieve the above objective, the technical proposals adopted by the present application are as follows.

In a first aspect, a four-wheel alignment measuring device is provided, including:
a support base, a support rod connected to the support base, and a camera device arranged on the support rod, a lengthwise direction of the support rod and a lengthwise direction of the support base forming a first inclination angle; and
a laser device configured to project a laser image toward a tire surface, and the camera device being configured to acquire the laser image and obtain alignment information of the tire using the laser image;

the laser device is disposed on the support base, the laser device is located on an end of the support base close to the support rod; and the camera device is located on an end of the support rod away from the support base; and
the laser device includes an oblique support and a laser module mounted on the oblique support; and wherein the oblique support is configured to support the laser module so that a central axis of the laser module and a plane where a wheel hub of the tire to be measured is located form a second inclination angle, and the laser module projects the laser image from the oblique support toward the surface of the tire to be measured; and the second inclination angle is ranged from 0° to 60°.

By adopting the above technical proposal, the lengthwise direction of the support base and the lengthwise direction of the support rod form a first inclination angle. This takes into account the projection range of the laser device, the center of gravity of the laser device close to the tire, and the angle between the laser image projected by the laser device and the camera device, thereby improving the accuracy of the measurement results, reducing the possibility of flipping of the four-wheel alignment measuring device, and enhancing the protection performance.

In one embodiment, the first inclination angle ranges from 45° to 90°.

In one embodiment, the support base includes a support case and a power supply component located inside the support case; the support case is provided with a first connection end and a second connection end in the lengthwise direction thereof, the first connection end is configured to fix the four-wheel alignment measuring device, the second connection end is configured to connect with the camera device and the laser device, and the power supply component is located inside the support case at the first connection end and is configured to electrically connect with the camera device and the laser device.

In one embodiment, the support rod includes a first support part and a second support part connected to the first support part; the first support part is configured to fix the four-wheel alignment measuring device, the second support part is configured to connect with the measuring device, and the second support part extends from the first support part in a direction away from the tire, a part of the second support part that is away from the first support part is configured to support the measuring device.

In one embodiment, the camera device includes a camera housing, a camera main body located inside the camera housing, and a lens connected to a camera head of the camera main body; the camera housing is provided with an accommodating cavity for accommodating the camera main body and a camera opening communicating with the accommodating cavity, the lens is provided in the camera opening, and a convex surface is provided on a side of the lens away from the camera head, the convex lens is configured to reduce a focal length of the camera main body so as to expand a viewing angle of the camera main body.

In one embodiment, the four-wheel alignment measuring device further includes a fixing member, which is arranged at an end of the support base away from the support rod, and the fixing member is configured to connect to a lift carrying the vehicle.

In one embodiment, the fixing member is a magnetic member, the magnetic member is disposed on the support base, and the magnetic member is configured to magnetically adsorb to the lift carrying the vehicle.

In one embodiment, the fixing member is a sliding wheel arranged at a bottom portion of the support base. The sliding wheel is configured to contact a ground on which wheel alignment is performed and is movably relative to the ground.

In a second aspect, a four-wheel alignment apparatus is provided, which includes a lift for carrying a vehicle and the above-mentioned four-wheel alignment measuring device. The four-wheel alignment measuring device is configured to be fixed on the lift.

### BRIEF DESCRIPTION OF THE DRAWINGS

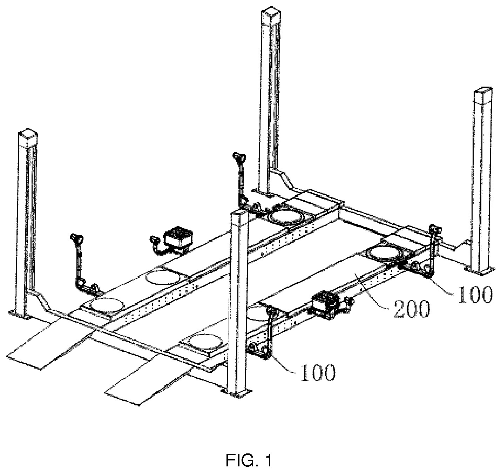

In order to more clearly illustrate the technical proposals in the embodiments of the present application, the drawings required to be used in the embodiments will be briefly introduced below. Apparently, the drawings in the following description are only some embodiments of the present application. Those of ordinary skill in the art can also obtain other drawings based on these drawings without exerting creative efforts. The examples shown in fig. 1-4, 7-8 are not encompassed by the wording of the claims, in that the laser is disposed on the support rod instead of on the support base.
FIG. 1 is a perspective structural view of a four-wheel alignment apparatus provided in an embodiment of the present application;
FIG. 2 is a perspective structural view of a four-wheel alignment measuring device provided in an embodiment of the present application;
FIG. 3 is a perspective structural view of a support base provided in an embodiment of the present application;
FIG. 4 is an exploded view of the support base provided in an embodiment of the present application viewed from an angle;
FIG. 5 is a perspective structural view of a power supply component provided in an embodiment of the present application;
FIG. 6 is an exploded view of the support base provided in the embodiment of the present application viewed from another angle;
FIG. 7 is a perspective structural view of a support rod provided in an embodiment of the present application;
FIG. 8 is an exploded view of the support rod provided in the embodiment of the present application;
FIG. 9 is a perspective structural view of a first camera device provided in an embodiment of the present application;
FIG. 10 is an exploded view of the first camera device provided in the embodiment of the present application;
FIG. 11 is a cross-sectional view of the first camera device provided by the embodiment of the present application;
FIG. 12 is an exploded view of a laser device provided in an embodiment of the present application; and
FIG. 13 is an exploded view of a laser module provided in the embodiment of the present application.

Reference signs are as follows:
100 four-wheel alignment measuring device; 200 lift;
1 support base; 2 support rod; 3 fixing member; 4 laser device; 5 camera device;
11 support case; 12 power supply component; 13 control component; 14 switch component; 15 charging component; 21 first support part; 22 second support part; 23 bending part; 24 support rod front cover; 25 support rod rear shell; 26 support rod body; 27 front cover case; 28 rear shell case; 51 camera housing; 52 camera main body; 53 lens; 54 communication component; 41 oblique support; 42 laser module; 43 laser housing;
111 first connection end; 112 second connection end; 121 power supply body; 122 power supply sleeve; 123 limiting plate; 131 control component shell; 113 support bottom case; 114 support top case; 511 camera opening; 531 convex surface; 532 light-guiding column; 421 laser element; 422 grating element; 431 laser opening; 411 bottom frame; 412 vertical frame; 413 inclined frame;
4131 inclined surface; 4132 connecting portion; 4133 supporting portion; 4134 cut-out; 4111 limiting groove; and 4112 reinforcing rib.

### DETAILED DESCRIPTION OF THE EMBODIMENTS

In order to make the above objects, features and advantages of the present application clearer and easier to understand, the present application will be described in detail below with reference to the accompanying drawings and embodiments. It should be understood that the embodiments described herein are for illustrative purposes only and should not be construed as limiting the present application.

It should be noted that when an element is referred to as being "fixed to" or "disposed on" another element, it can be directly on the other element or indirectly on the other element. When an element is referred to as being "connected to" another element, it may be directly connected or indirectly connected to the other element.

It should be understood that terms "lengthwise", "widthwise", "upper", "lower", "front", "rear", "left", "right", "vertical", "horizontal", " top", "bottom", "inside", "outside", etc. indicating orientation or positional relationship are based on the orientation or positional relationship shown in the drawings, and are merely for the convenience of describing the present application and simplifying the description, rather than indicating or implying that the device or element referred to must have a specific orientation, be constructed and operate in a specific orientation, and therefore cannot be construed as limiting the present application.

In addition, terms "first" and "second are used for descriptive purposes only and cannot be understood as indicating or implying the relative importance or implicitly indicating the quantity of the indicated features. In the description of this application, the term "a plurality of" means two or more, unless otherwise expressly and specifically defined. Embodiments of the present application will be described in detail below with reference to the accompanying drawings.

As shown in FIG. 1, a four-wheel alignment measuring device 100 for wheel alignment measuring operation of a vehicle is provided in an embodiment of the present application. As an example, the four-wheel alignment measuring device 100 can be fixed on a lift 200 carrying a vehicle, or installed on a frame structure similar to the lift 200 carrying a vehicle, or directly disposed beside the vehicle to perform wheel alignment measurement. This embodiment will be described with the arrangement that the four-wheel alignment measuring device 100 is mounted on a lift 200 carrying a vehicle. In this embodiment, the four-wheel alignment measuring device 100 projects a laser image on the surface of the tire, and then acquires and analyzes the laser image to obtain alignment information of the tire. The four-wheel alignment measuring device 100 of this embodiment is not prone to flipping when fixed, and has good protection performance. The embodiment is described below through the detailed implementation.

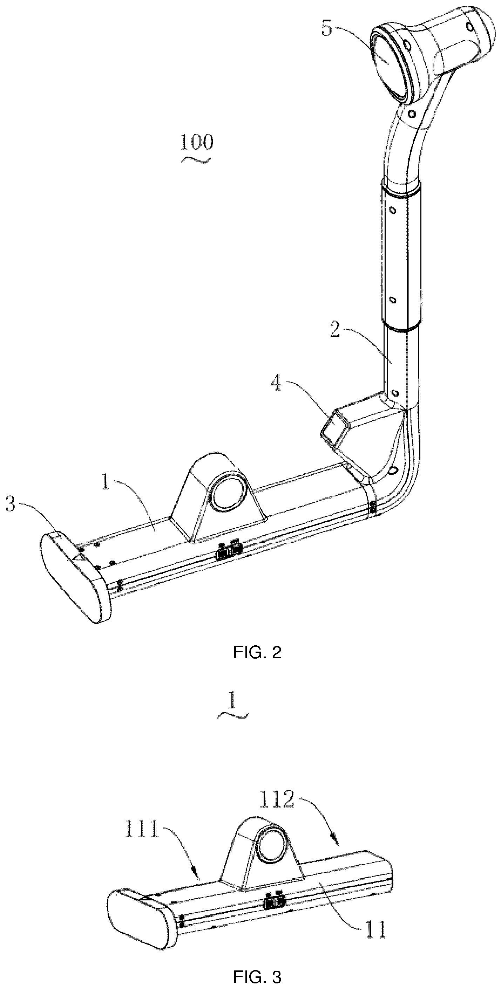

Referring to FIG. 2, the four-wheel alignment measuring device 100 of this embodiment includes:
a support base 1, a support rod 2 connected to the support base 1, a camera device 5 and a laser device 4 arranged on the support rod 2, a lengthwise direction of the support rod 2 and a lengthwise direction of the support base 1 form a first inclination angle. The laser device 4 is configured to project a laser image onto the tire surface, and the camera device 5 is configured to obtain the laser image and obtain the alignment information of the tire using the laser image.

Here, it can be understood that the support base 1 is configured to support the laser device 4 and the support rod 2 is configured to support the camera device 5, so that when the four-wheel alignment measuring device 100 is fixed on the lift 200 carrying the vehicle, the laser device 4 and the camera device 5 are in the correct measurement position. Specifically, the laser device 4 is located on the support base 1 and is configured to project laser toward the tire, and the laser forms a laser image on the surface of the tire. The camera device 5 is located on the support rod 2 and is configured to capture the laser image on the tire surface, and analyze the laser image, and finally obtain the alignment information of the tire. The laser device 4 may be a laser projection device, and the laser projection device projects multiple laser beams toward the surface of the tire, thus laser spots are formed on the surface of the tire, that is, a laser image is formed. The camera device 5 may be a camera device 5. The camera device 5 captures the laser spots, and obtains the alignment information, e.g. the inclination angle, of the tire by analyzing date of the laser spots such as length, spacing, deformation and the like. It should be noted that the lengthwise direction of the support rod 2 forms a first inclination angle with the lengthwise direction of the support base 1, and the support base 1 is configured to fix the entire four-wheel alignment measuring device 100. In this embodiment, an end of the support base 1 is connected to the lift 200 carrying the vehicle, that is, the support base 1 is positioned close to the tire, and the support rod 2 is inclined so that the camera device 5 can be close to the tire in order to obtain a clear laser image. Moreover, such a design can also make the center of gravity of the camera device 5 close to the tire, preventing the entire four-wheel alignment measuring device 100 from tilting due to the excessive weight of the camera device 5. In addition, when the laser device 4 is arranged on the support base 1, a certain distance is provided between the laser device 4 and the tire, which ensures the projection range of the laser device 4, avoids significant distortion of the laser image projected on the tire surface, and improves the clarity of the laser image and the recognition accuracy of the camera device 5. Moreover, such a design allows the center of gravity of the laser device 4 to be as close to the tire as possible, reducing the possibility of tilting of the four-wheel alignment measuring device 100. In addition, such a design reduces the angle between the laser image projected by the laser device 4 and the camera device 5, thereby reducing the difficulty of recognition by the camera device 5.

The operating mechnism of the four-wheel alignment measuring device 100 provided in this embodiment is as follows.

The vehicle is placed on a lift 200 for carrying a vehicle, and the four-wheel alignment measuring device 100 is installed on the lift 200 carrying the vehicle and is disposed close to the tire. Specifically, the position of the fixing member 3 is adjusted so that the laser device 4 and the camera device 5 are in the correct measurement position. The laser device 4 is activated to form a laser image on the tire surface, and the laser image is then captured by the camera device 5, and the alignment information of the tire is obtained through by analyzing the laser image.

By adopting the above technical proposal, the lengthwise direction of the support base 1 and the lengthwise direction of the support rod 2 form a first inclination angle, this takes into account the projection range of the laser device 4, the center of gravity of the laser device 4 close to the tire, and the angle between the laser image projected by the laser device 4 and the camera device 5, thereby improving the accuracy of the measurement results, reducing the possibility of tilting of the four-wheel alignment measuring device 100, and improving the protection performance.

According to the claimed invention, the laser device 4 is disposed on the support base 1. In examples not encompassed by the wording of the claims the laser device is disposed on the support rod 2; alternatively, the laser device 4 and the camera device 5 are an integrated device.

Here, it can be understood that when the laser device 4 is arranged on the support base 1, the laser device 4 may be arranged at any position in the lengthwise direction of the support base 1. In examples not encompassed by the wording of the claims, when the laser device 4 is arranged on the support rod 2, the laser device 4 may be arranged at any position in the lengthwise direction of the support rod 2, alternatively, the laser device 4 and the camera device 5 may be an integrated device, that is, the integrated device integrates the laser image projection function and the camera function.

By adopting the above technical proposal, there are multiple arrangements of the laser device 4, and the arrangement is highly flexible.

In one embodiment, the first inclination angle ranges from 45° to 90°.

Optionally, the first inclination angle is 45°, 60°, 75°, or 90°.

Preferably, the first inclination angle is 90°.

By adopting the above technical proposal, when the first inclination angle is 90°, the support rod 2 is perpendicular to the support base 1, and the center of gravity of the support rod 2 coincides with its own central line. This allows a certain distance between the camera device 5 and the tire, ensuring that the camera device 5 has a sufficient acquisition range, while also ensuring that the center of gravity of the camera device 5 will not deviate too far away from the tire, thereby increasing the risk of possible flipping.

In one embodiment, when the laser device 4 is disposed on the support base 1, the laser device 4 is located on the end of the support base 1 close to the support rod 2. The camera device 5 is located on the end of the support rod 2 away from the support base 1.

Here, it can be understood that the laser device 4 is located on the end of the support base 1 close to the support rod 2, that is, the laser device 4 is arranged away from the fixing member 3. When the fixing member 3 is fixed on the lift 200, the laser device 4 faces away from the lift 200, that is, the laser device 4 is arranged facing away from the tire, which ensures that there is a sufficient distance between the laser device 4 and the tire so that the laser image projected by the laser device 4 on the tire surface is clear. The camera device 5 is located on the end of the support rod 2 away from the support base 1, so that the camera device 5 is positioned away from the support base 1, which facilitates the camera device 5 to capture the laser image on the tire surface.

By adopting the above technical proposal, the clarity of the laser image projected by the laser device 4 on the tire surface is improved, which facilitates the camera device 5 to capture the laser image of the tire surface.

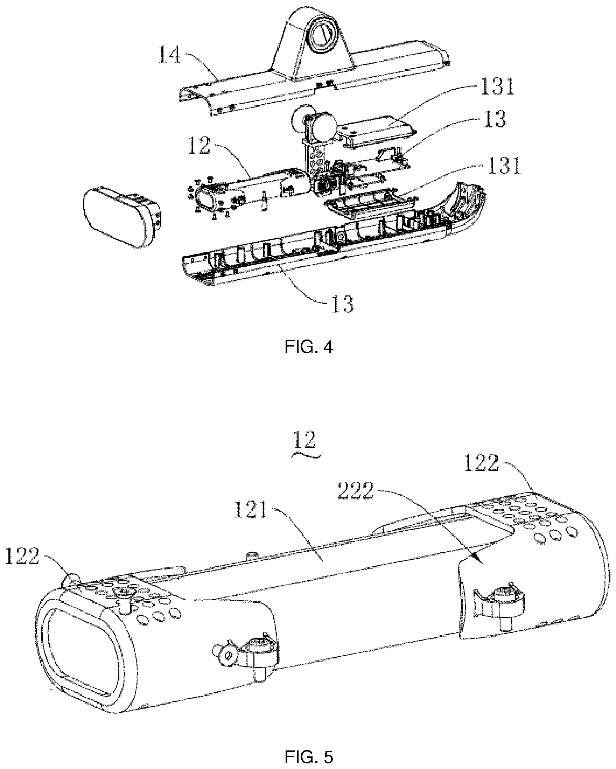

Referring to FIGS. 3 and 4, in one embodiment, the support base 1 includes a support case 11 and a power supply component 12 arranged inside the support case 11. The support case 11 is provided with a first connection end 111 and a second connection end 112 along its own lengthwise direction, the first connection end 111 is configured to fix the four-wheel alignment measuring device 100, and the second connection end 112 is configured to connect with the camera device 5 and the laser device 4. The power supply component 12 is located inside the case at the first connection end 111, and the power supply component 12 is configured to be electrically connected to the camera device 5 and the laser device 4.

Here, it can be understood that the support case 11 is configured to protect the power supply component 12 inside the support case 11 so as to avoid damage to the power supply component 12. The power supply component 12 is configured to supply power to the camera device 5.

Specifically, the support case 11 is formed with a first connection end 111 and a second connection end 112, the first connection end 111 and the second connection end 112 are arranged opposite to each other and both are located along the lengthwise direction of the support case 11. The first connection end 111 is configured to connect to the lift 200 carrying the vehicle, and the second connection end 112 is configured to connect to the camera device 5. The power supply component 12 is configured to be electrically connected to the camera device 5. Since the power supply component 12 is relatively heavy, so by arranging the power supply component 12 at the first connection end 111, the center of gravity of the entire support base 1 can be located close to the vehicle.

The operating mechanism of the support base 1 provided in this embodiment is as follows.

The camera device 5 is arranged on the second connection end 112 of the support base 1, and the first connection end 111 of the support base 1 is connected to the lift 200 carrying the vehicle. Since the support base 1 has a certain length, the support base 1 can form a predetermined distance between the camera device 5 and the tire of the vehicle.

By adopting the above technical proposal, since the power supply component 12 is heavy, arranging the power supply component 12 at the first connection end 111 can cause the center of gravity of the entire support base 1 to move toward the vehicle. Additionally, since the power supply component 12 is located at the opposite end to the camera device 5 and the laser device 4 on the support base 1, the power supply component 12 balances the influence of the weight of the camera device 5 and the laser device 4 on the support base 1, reduces the possibility of tilting of the support base 1, and reduces the possibility of damage to the camera device 5 and the laser device 4.

Referring to FIG. 5, in one embodiment, the power supply component 12 includes a power supply body 121 and two power supply sleeves 122 respectively arranged at two end portions of the power supply body 121. The power supply sleeves 122 are sleeved on the ends of the power supply body 121. The power supply sleeves 122 connect the power supply body 121 and the support case 11, so that a shock-absorbing clearance is formed between the power supply body 121 and the support case 11.

Here, it can be understood that the power supply body 121 is configured to provide electric energy, and the power supply sleeve 122 is configured to fix the power supply body 121 and improve the protection performance of the power supply body 121.

Specifically, the power supply component 12 includes a power supply body 121 and a power supply sleeve 122. The power supply body 121 includes but is not limited to a rechargeable battery, which can be repeatedly charged and used. The power supply sleeve 122 includes but is not limited to plastic sleeves. The power supply sleeve 122 is sleeved on the end portion of the power supply body 121, optionally, the two end portions of the power supply body 121 may be respectively sleeved with a power supply sleeve 122 for fixing the two end portions of the power supply body 121.

It should be further understood that the power supply sleeve 122 is arranged between the power supply body 121 and the support case 11, that is, the power supply sleeve 122 is in contact with the outer wall of the power supply body 121 and the inner wall of the support case 11, so that a shock-absorbing clearance is formed between the power supply body 121 and the support case 11, which improves the protective performance of the power supply body 121.

By adopting the above technical proposal, the power supply body 121 is fixed inside the support case 11, while the protection performance of the power supply body 121 is improved, and the possibility of thermal runaway of the power supply body 121 is reduced.

In one embodiment, the power supply sleeve 122 forms a limiting plate 123 extending toward the inner side of the support case 11, and the limiting plate 123 abuts the power supply body 121.

Here, it can be understood that the limiting plate 123 is configured to limit the power supply body 121.

Specifically, the limiting plate 123 is formed on the power supply sleeve 122, and the limiting plate 123 extends toward the opposite side of the power supply sleeve 122, that is, the limiting plate 123 extends toward the opposite side along the lengthwise direction of the power supply body 121, so that, the limiting plate 123 abuts the power supply body 121 at a position along the lengthwise direction of the power supply body 121.

By adopting the above technical proposal, the limiting plate 123 abuts the power supply body 121, thereby increasing the stability of the power supply body 121 being fixed inside the support case 11.

Referring back to FIG. 4, in one embodiment, the support base 1 further includes a control component 13 electrically connected to the power supply component 12, and the control component 13 is located at the second connection end 112.

Here, it can be understood that the control component 13 is configured to control the operation of the power supply component 12.

Specifically, the control component 13 includes but is not limited to a chip or circuit board having functions of data collection, data processing and data transmission.

It needs to be further understood that the control component 13 is arranged at the second connection end 112, and the control component 13 and the power supply component 12 are located at opposite ends of the support case 11. Since the weight of the control component 13 is relatively light compared to the weight of the power supply component 12, the center of gravity of the support base 1 is still located close to the vehicle.

By adopting the above technical proposal, the operation of the power supply component 12 is controlled, while the center of gravity of the support base 1 is maintained closer to the vehicle.

In one embodiment, the control component 13 includes a system main board and a charging control board stacked with the system main board. The system main board is electrically connected to the camera device 5, and the charging control board is electrically connected to the power supply component 12.

Here, it can be understood that the system main board is configured to be electrically connected to the camera device 5, and the charging control board is electrically connected to the power supply component 12.

Specifically, the system main board is configured to control the operation of the camera device 5, and the charging control board is configured to control the charging and discharging operations of the power supply component 12.

By adopting the above technical proposal, the system mainboard and the charging control board are stacked together, which reduces the space occupied by the control component 13 inside the support case 11 and allows the support base 1 to be miniaturized.

In one embodiment, the control component 13 also includes a control component shell 131. The control component shell 131 is wrapped around the system mainboard and charging control board. The control component shell 131 is connected to the support case 11, so as to form a shock-absorbing clearance between the system mainboard and charging control board and the inner wall of the support case 11.

Here, it can be understood that the control component shell 131 is configured to protect the system main board and the charging control board.

Specifically, the control component shell 131 is formed with an accommodating cavity, the shape and size of the accommodating cavity match the shape and size of the system main board and the charging control board, so that the system main board and the charging control board can be accommodated in the accommodating cavity, and the control component shell 131 is connected to the support case 11, so that a shock-absorbing gap is formed between the system main board and the charging control board and the inner wall of the support case 11.

By adopting the above technical proposal, the control component shell 131 can improve the protection performance of the system main board and the charging control board.

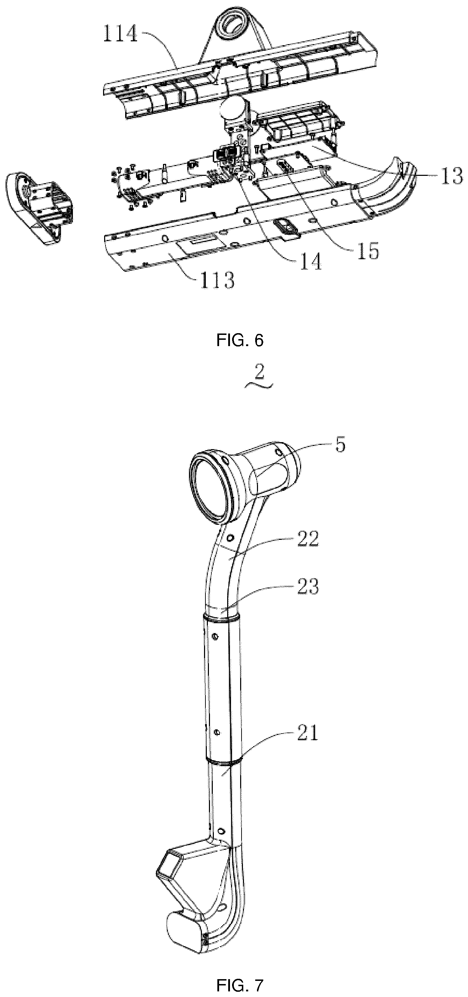

Referring to FIG. 6, in one embodiment, the support base 1 further includes a switch component 14 and a charging component 15. The switch component 14 and the charging component 15 are disposed on the support case 11. The switch component 14 is electrically connected to the system mainboard, and the charging component 15 is electrically connected to the charging control board.

Here, it can be understood that the switch component 14 is configured to control the camera device 5, and the charging component 15 is configured to control the power supply component 12.

Specifically, the switch component 14 includes but is not limited to a mechanical switch and a touch switch, and the charging component 15 includes but is not limited to a charging terminal.

By adopting the above technical proposal, the smart control of the support base 1 is enhanced.

In one embodiment, the support case 11 includes a support bottom case 113 and a support top case 114 engaged with the support bottom case 113.

Here, it can be understood that the support bottom case 113 and the support top case 114 can be engaged and fixed through fasteners.

By adopting the above technical proposal, the structure of the support case 11 is simple and easy to manufacture.

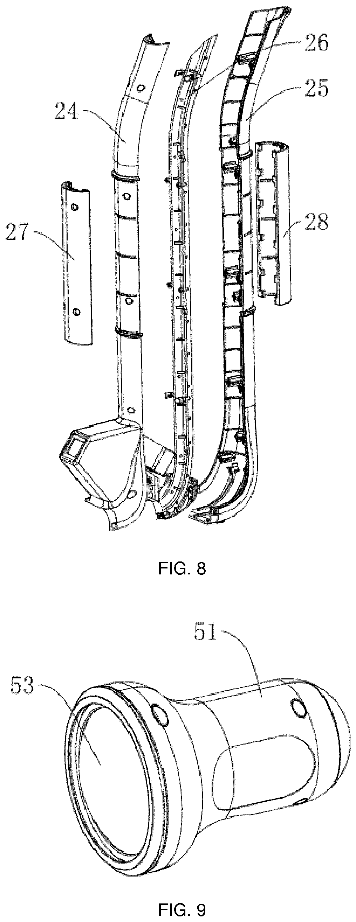

As shown in FIGS. 7 and 8, in one embodiment, the support rod 2 includes a first support part 21 and a second support part 22 connected to the first support part 21. The first support part 21 is configured to fix the four-wheel alignment measuring device 100, and the second support part 22 is configured to connect with the camera device 5. The second support part 22 extends from the first support part 21 in a direction away from the tire, and a part of the second support part 22 away from the first support part 21 is configured for supporting the camera device 5.

Here, it can be understood that the first support part 21 is configured to connect with the lift 200 carrying the vehicle, and the second support part 22 is configured to connect with the camera device 5.

Specifically, the first support part 21 connects the second support part 22 and the lift 200 carrying the vehicle. The first support part 21 is configured to fix the second support part 22 relative to the lift 200 carrying the vehicle and to separate the second support part 22 from the tire by a certain distance. The second support part 22 connects the first support part 21 and the camera device 5. The second support part 22 is configured to fix the camera device 5 relative to the tire and to separate the camera device 5 from the tire by a predetermined distance.

It needs to be further understood that when the support rod 2 is connected to the lift 200 carrying the vehicle, the second support part 22 extends from the first support part 21 in a direction away from the vehicle, that is, the second support part 22 is disposed further away from the tire of the vehicle than the first support part 21, so that the camera device 5 on the second support part 22 can be far away from the tire to ensure that the camera device 5 is separated from the tire by a predetermined distance. Moreover, the first support part 21 is disposed closer to the tire of the vehicle than the second support part 22, so that the center of gravity of the entire support rod 2 is closer to the vehicle, thereby reducing the tilting of the support rod 2 caused by the distance between the support rod 2 and the vehicle being too large.

By adopting the above technical proposal, the second support part 22 extends from the first support part 21 in a direction away from the vehicle, so that the camera device 5 on the second support part 22 can be placed away from the tire, ensuring that there is sufficient space with a predetermined distance between the camera device 5 and the tire. Additionally, the first support part 21 is arranged closer to the tire relative to the second support part 22, so that the center of the entire support rod 2 is closer to the tire, reducing the flipping caused by the center of gravity of the support rod 2 being far away from the tire, and reducing potential damage to the camera device 5.

In one embodiment, when the first support part 21 is connected to the lift 200 carrying the vehicle, the lengthwise direction of the first support part 21 is parallel to the vertical direction.

Here, it can be understood that when the vehicle is to be measured, the wheel hub of the vehicle tire is perpendicular to the ground, that is, the surface of the wheel hub is parallel to the vertical direction. At this time, the lengthwise direction of the first support part 21 is parallel to the vertical direction. In this manner, the second support part 22 is at a certain height when supported by the first support part 21, thereby allowing the camera device 5 on the second support part 22 to be at a certain height, which is conducive to arranging the camera device 5 corresponding to the center of the tire and allowing the camera device 5 to be in the normal measurement range.

It should be further understood that the camera device 5 is configured to measure the alignment information of the tire, and the camera device 5 is configured to photograph or emit detection rays to obtain the alignment information of the tire. In this embodiment, the lengthwise direction of the first support part 21 and the vertical direction are in parallel, this avoids the first support part 21 blocking the camera device 5 and reduces the impact of the first support part 21 on the measurement results of the camera device 5.

By adopting the above technical proposal, the first support part 21 is arranged to be parallel to the vertical direction during the examination of the vehicle, which avoids the first support part 21 blocking the camera device 5 and reduces the impact on the measurement result.

In one embodiment, the lengthwise direction of the second support part 22 intersects with the lengthwise direction of the first support part 21.

Here, it can be understood that the first support part 21 is configured to ensure that the camera device 5 is spaced a predetermined distance from the tire.

Specifically, the lengthwise direction of the second support part 22 intersects with the lengthwise direction of the first support part 21, that is, the second support part 22 and the first support part 21 form an angle therebetween. When performing vehicle examination, the lengthwise direction of the first support part 21 is parallel to the vertical direction. At this time, the lengthwise direction of the second support part 22 intersects with the lengthwise direction of the first support part 21, and the support parts are inclined with respect to each other, so that the camera device 5 on the second support part 22 can be further away from the vehicle relative to the first support part 21, and camera device 5 can be spaced a predetermined distance from the tire of the vehicle.

By adopting the above technical proposal, the second support part 22 is extended in a direction away from the vehicle, so that the camera device 5 on the second support part 22 can be spaced a sufficient distance from the tire of the vehicle.

In one embodiment, the lengthwise direction of the second support part 22 intersects with the lengthwise direction of the first support part 21 to form a third inclination angle, and the third inclination angle ranges from 90° to 180°.

Here, it can be understood that, within the above-mentioned range of the inclination angle, the second support part 22 can ensure that a sufficient distance between the camera device 5 and the vehicle tire, preferably, the inclination angle is 160°.

By adopting the above technical proposal, a sufficient distance is is ensured between the camera device 5 on the second support part 22 and the vehicle tire.

In one embodiment, the support rod 2 is provided with a bending part 23, and the bending part 23 separates the support rod 2 into the first support part 21 and the second support part 22.

Here, it can be understood that a portion of the support rod 2 along the lengthwise direction thereof forms a bending part 23, and the bending part 23 separates the support rod 2 into the first support part 21 and the second support part 22.

Specifically, the support rod 2 may be integrally formed, and a part along the lengthwise direction thereof is bent to form a bending part 23, which separates the support rod 2 into the first support part 21 and the second support part 22, and the second support part 22 extends in a direction away from the vehicle tire.

By adopting the above technical proposal, the support rod 2 forms the first support part 21 and the second support part 22 in a simple manner.

In one embodiment, the support rod 2 includes a support rod front cover 24, a support rod rear shell 25 connected to the support rod front cover 24, and a support rod body 26 arranged between the support rod front cover 24 and the support rod rear shell 25. The support rod front cover 24 and the support rod rear shell 25 are engaged to provide an accommodating channel, the support rod 2 is arranged in the accommodating channel and can extend along the accommodating channel so that the end of the support rod 2 is connected to the camera device 5. The support rod front cover 24, the support rod rear shell 25, and the support rod body 26 together form the first support part 21, the second support part 22, and the bending part 23.

Here, it can be understood that the support rod 2 is assembled from multiple components. The support rod 2 includes a support rod front cover 24, a support rod rear shell 25, and a support rod body 26. The support rod front cover 24 and the support rod rear shell 25 are engaged to provide an accommodating channel therebetween. The support rod 2 is arranged in the accommodating channel and extends along the accommodating channel. An end of the support rod 2 is configured to support the camera device 5, and the other end of the support rod 2 is connected with the lift 200 carrying the vehicle. The support rod front cover 24, the support rod rear shell 25 and the support rod body 26 together form the first support part 21, the second support part 22, and the bending part 23.

By adopting the above technical proposal, the structure of the support rod 2 is simple and easy to manufacture.

In one embodiment, the support rod 2 also includes a front cover case 27 and a rear shell case 28 engaged with the front cover case 27. The front cover case 27 is disposed on the support rod front cover 24, and the rear shell case 28 is disposed on the support rod rear shell 25.

Here, it can be understood that the front cover case 27 and the rear shell case 28 are for the operator to grasp and are also configured to reinforce the support rod front cover 24 and the support rod rear shell 25.

By adopting the above technical proposal, the connection between the support rod front cover 24 and the support rod rear shell 25 is further strengthened, thereby improving the durability of the support rod 2.

In one embodiment, the front cover case 27 and the rear shell case 28 are both soft pieces.

Here, it can be understood that the soft pieces are elastic and non-slip; the soft pieces include but are not limited to silicone pieces and rubber pieces.

By adopting the above technical proposal, a better grip can be provided for the operator, and the risk of the support rod 2 slipping from the operator's hand is reduced.

In one embodiment, the surfaces of the front cover case 27 and the rear shell case 28 are provided with anti-slip grooves.

By adopting the above technical proposal, the risk of the support rod 2 slipping from the operator's hand is further reduced.

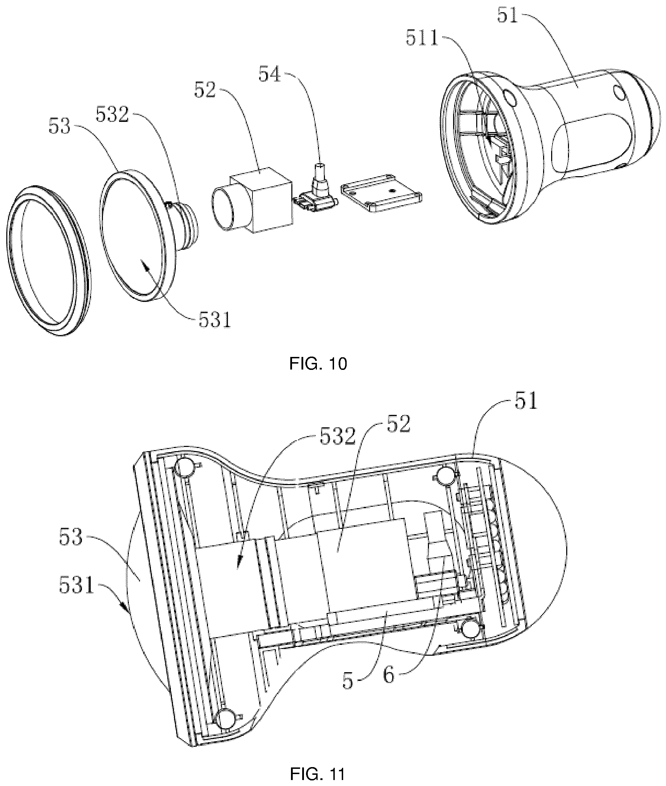

As shown in FIGS. 9 to 11, in one embodiment, the camera device 5 includes a camera housing 51, a camera main body 52 provided inside the camera housing 51, and a lens 53 connected to the camera head of the camera main body 52. The camera housing 51 is provided with an accommodating cavity for accommodating the camera main body 52 and a camera opening 511 that communicates with the accommodating cavity. The lens 53 is located in the camera opening 511. A side of the lens 53 facing away from the camera head is provided with a convex surface 531. The convex lens 53 is configured to reduce the focal length of the camera main body 52 to expand the viewing angle of the camera main body 52.

Here, it can be understood that the camera housing 51 is configured to protect and support the camera main body 52 and the lens 53. The camera main body 52 is configured to obtain a tire image, thereby analyzing the tire alignment information. The lens 53 is configured to adjust the focal length of the camera main body 52, so that the viewing angle of the camera main body 52 is expanded, ensuring that a complete image of the tire surface can be obtained even when the camera main body 52 is close to the tire.

Specifically, the camera housing 51 serves as a protective member and a supporting member, and the camera housing 51 is provided with an accommodating cavity and a camera opening 511. The accommodating cavity is arranged inside the camera housing 51, and the camera opening 511 is opened on and penetrates through the camera housing 51 and is communicated with the accommodating cavity. The camera main body 52 is arranged in the accommodating cavity, and the camera head of the camera main body 52 directly faces the camera opening 511. The lens 53 is arranged in the camera opening 511 and is covered on the camera head of the camera main body 52. The lens 53 is a convex lens 53, and a convex surface 531 is arranged on the side of the lens 53 facing away from the camera main body 52. The convex lens 53 is configured to reduce the focal length of the camera main body 52 to expand the viewing angle of the camera main body 52.

The operating mechanism of the camera device 5 provided in this embodiment is as follows.

The camera device 5 is located near the tire with the camera facing the tire surface, and an image of the tire is captured by the camera. Since a convex lens 53 is provided on the front side of the camera, more reflected light from the tire surface can enter the convex lens 53 through the convex surface 531, and then enter the camera main body 52 from the convex lens 53, that is, the focal length of the camera main body 52 is adjusted, the viewing angle of the camera main body 52 is expanded, and the camera main body 52 can obtain a broader picture range. In this manner, the camera main body 52 can obtain a more complete tire image at a closer distance to the tire.

By adopting the above technical proposal, it is ensured that the camera device 5 can still obtain a complete tire image when the distance to the tire is too close, thereby improving the amount of image recognition information and the recognition accuracy.

In one embodiment, the central axis of the camera main body 52 forms a second inclination angle with the lengthwise direction of the support base 1, and the second inclination angle ranges from 0° to 45°.

Here, it can be understood that the camera main body 52 is configured to obtain a laser image of the tire surface. During the measurement, the laser device 4 projects a laser image on the tire surface from below in an obliquely upward direction, and the camera main body 52 captures the laser image on the tire surface from above in an obliquely downward direction.

It should be further understood that, optionally, the second inclination angle is 15° or 30°.

By adopting the above technical proposal, the camera main body 52 is inclined, which facilitates the acquisition of the laser image.

In one embodiment, the lens 53 is provided with a light-guiding column 532. One end of the light-guiding column 532 is connected to the side of the lens 53 facing away from the convex surface 531. The other end of the light-guiding column 532 facing away from the lens 53 is connected to the camera main body 52. The light reflected by the tire surface enters the lens 53 through the convex surface 531 and then enters the camera main body 52 through the light-guiding column 532.

Here, it can be understood that the light-guiding column 532 is configured to guide the light entering the lens 53 into the camera main body 52, and the light-guiding column 532 is also configured to connect the lens 53 and the camera main body 52.

Specifically, the light-guiding column 532 is made of a light-guiding medium. After the light in the lens 53 enters the light-guiding column 532, the light is guided by the light-guiding column 532 into the camera main body 52.

By adopting the above technical proposal, the distance between the lens 53 and the camera main body 52 is increased, which facilitates the arrangement of the internal components of the camera device 5.

In one embodiment, the light-guiding column 532 and the lens 53 are arranged coaxially.

Here, it can be understood that when the camera device 5 is used for wheel alignment examination, the camera device 5 approximately corresponds to the center position of the tire, that is, the light reflected by the tire surface enters into the lens 53 from outer periphery of the lens 53. Therefore, the direction of the light entering the lens 53 is approximately parallel to the radial direction of the lens 53 and converges at the center of the lens 53. The light-guiding column 532 and the lens 53 are coaxially arranged to facilitate guiding the light in the lens 53 to the camera main body 52.

By adopting the above technical proposal, the light-guiding rate of the light-guiding column 532 is improved.

In one embodiment, the diameter of the light-guiding column 532 is smaller than the diameter of the lens 53.

Here, it can be understood that the light-guiding column 532 is configured to guide the light in the lens 53. Since the light entering the lens 53 converges at the center of the lens 53, the diameter of the light-guiding column 532 can be set to be smaller than the diameter of the lens 53, so that the volume of the light-guiding column 532 is reduced while ensuring the light-guiding ability.

By adopting the above technical proposal, the volume of the light-guiding column 532 is reduced, minimizing the entire camera device 5.

In one embodiment, the camera device 5 further includes a communication component 54. The communication component 54 is connected to the camera main body 52. The communication component 54 is configured to enable the camera main body 52 to communicate with external devices.

Here, it can be understood that the communication component 54 is configured to send the image information acquired by the camera main body 52.

Specifically, the communication component 54 includes but is not limited to a communication connection cable, which can establish a communication connection between the camera main body 52 and the external devices through a wired or wireless manner. For example, the communication component 54 is a Wi-Fi communication component 54, that is, the camera main body 52 can be connected to an external mobile terminal through a Wi-Fi wireless communication connection, so that the tire image obtained by the camera main body 52 can be sent to the mobile terminal in time, so that the operator can obtain the tire information.

By adopting the above technical proposal, the tire image acquired by the camera main body 52 can be transmitted in time, thereby improving the smart control of the camera device 5.

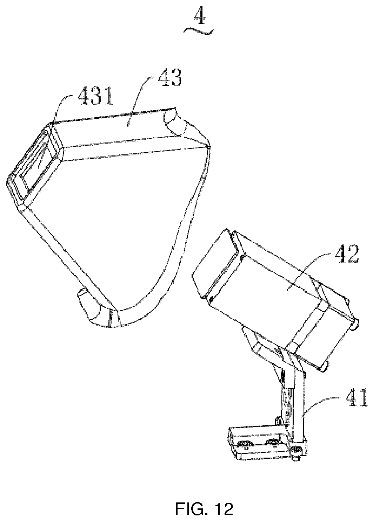

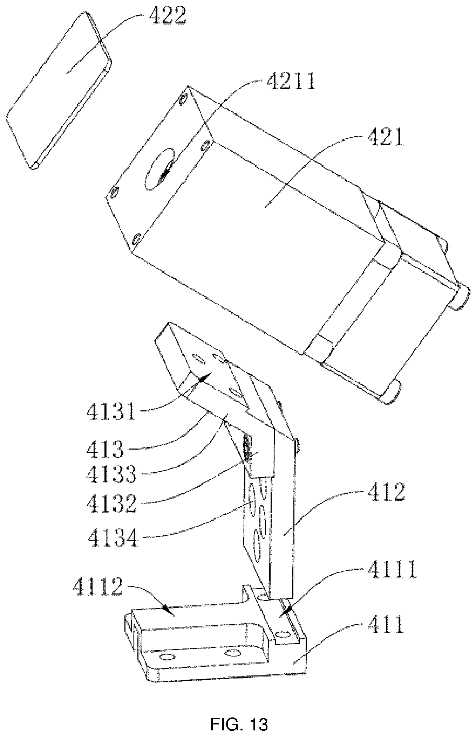

As shown in FIGS. 12 and 13, in one embodiment, the laser device 4 includes an oblique support 41 and a laser module 42 arranged on the oblique support 41. The oblique support 41 is configured to support the laser module 42, so that the central axis of the laser module 42 forms a second inclination angle with the plane where the wheel hub of the tire to be measured is located, and the laser module 42 projects a laser image from the oblique support 41 toward the surface of the tire to be measured.

Here, it can be understood that the oblique support 41 is configured to support the laser module 42, that is, to support the laser module 42 at a suitable projection position so that the laser image projected by the laser module 42 can cover the surface of the tire to be measured, and the laser module 42 is inclined and fixed relative to the tire to be measured, that is, when the oblique support 41 supports the laser module 42, the central axis of the laser module 42 forms a second inclination angle with the plane where the wheel hub of the tire to be measured is located. The laser module 42 is configured to project a laser image toward the surface of the tire to be measured, and the camera device 5 acquires the laser image and analyzes the alignment information of the tire according to the deformation and spacing of the laser image.

Specifically, the laser module 42 is arranged on the oblique support 41, and the laser module 42 is configured to project a laser image toward the surface of the tire, so that a laser image is formed on the surface of the tire. The camera device 5 is configured to capture the laser image on the tire surface and analyze the laser image to obtain the alignment information of the tire. The laser module 42 can project a plurality of lasers toward the surface of the tire to form laser spots on the tire surface, that is, to form a laser image, and the camera device 5 captures the laser spots and finally obtains the alignment information of the tire, such as the inclination angle of the tire, by analyzing data of the laser spots, e.g., the length, spacing, deformation, and the like. The laser module 42 is in an inclined state under the support of the oblique support 41, namely, the laser module 42 forms an angle with the plane where the wheel hub of the tire to be measured is located. That is, the laser device 4 emits the laser at an angle. This ensures the projection distance of the laser module 42 while minimizing the distance between the laser module 42 and the tire, so that the laser can cover the tire surface, increasing the projection range of the laser, avoiding a significant distortion of the laser image projected on the tire surface, improving the clarity of the laser image, and improving the recognition accuracy of the camera device 5. Additionally, such a design takes into account that the center of gravity of the laser module 42 is as close to the tire as possible, reducing the possibility of tilting of the four-wheel alignment measuring device 100. In addition, such a design reduces the recognition difficulty of the camera device 5 and improves the accuracy of the results of the vehicle examining equipment.

By adopting the above technical proposal, the laser image projected by the laser device 4 covers the range of the tire surface while ensuring the miniaturization of the vehicle examination equipment and the relatively small distance between the laser device 4 and the tire, thereby improving the recognition accuracy of the laser image, that is, improving the accuracy of the examination results of the vehicle examination equipment.

In one embodiment, the second inclination angle ranges from 0° to 60°.

Here, it can be understood that, during the wheel alignment measurement operation, the laser device 4 is arranged facing the side of the wheel hub of the tire to be measured and is located obliquely below the wheel hub. The laser element is configured to project the laser image on the surface of the tire to be measured from obliquely below in an obliquely upward direction. Here, the central axis of the laser element forms a second inclination angle with the plane where the wheel hub of the tire to be measured is located, and the inclination angle ranges from 0° to 60°. The laser element projects the laser image on the surface of the tire to be measured from the above-mentioned inclination angle, thereby expanding the range of the laser image covering the tire, improving the clarity of the laser image obtained by the camera device 5, and improving the accuracy of the examination results of the vehicle examining equipment.

Optionally, the second inclination angle is 15°, 30°, or 45°.

By adopting the above technical proposal, the range of the laser image covering the tire is expanded, thereby improving the clarity of the laser image obtained by the camera device 5 and improving the accuracy of the examination result of the vehicle examining equipment.

In one embodiment, the laser module 42 includes a laser element 421 for projecting laser light and a grating element 422 for forming the laser light into a laser image. The grating element 422 is located on the light emitting hole 4211 of the laser element 421.

Here, it can be understood that the grating element 422 can separate the laser into a plurality of laser beams, thereby forming a plurality of laser spots on the tire surface, and the plurality of laser spots form a laser image.

Specifically, each laser spot has a preset shape and a preset length, and the plurality of laser spots are spaced by a predetermined distance. The camera device 5 captures the plurality of laser spots, and obtains tire alignment information, such as the tire's inclination angle, by analyzing the data of the plurality of laser spots, e.g., lengths, spacings, deformations, and the like.

By adopting the above technical proposal, the grating element 422 can make the laser emitted by the laser element 421 form a laser image, which is beneficial for the camera device 5 to obtain and easily analyze the alignment information of the tire.

In one embodiment, the laser device 4 further includes a laser housing 43. The laser housing 43 is covered outside the laser element 421 and is provided with a laser opening 431. The grating element 422 is located in the laser opening 431. The grating element 422 and the laser element 421 are spaced apart.

Here, it can be understood that the laser housing 43 is configured to protect the laser element 421 and prevent the laser element 421 from being damaged.

Specifically, the laser element 421 is accommodated inside the laser housing 43. The laser housing 43 is provided with a laser opening 431. The laser opening 431 faces the light-emitting hole 4211 of the laser element 421, so that the laser produced by the laser element 421 can be emitted from the laser opening 431.

By adopting the above technical proposal, the protective performance of the laser element 421 is improved. In addition, the laser housing 43 is provided with a laser opening 431, which facilitates the fixation of the grating element 422, and the grating element 422 is spaced apart from the laser element 421, which is conducive to dividing the laser into a plurality of laser beams.

In one embodiment, a plurality of parallel slits are arranged on the grating element 422.

Here, it can be understood that the grating element 422 is configured to separate the laser emitted by the laser element 421 into a plurality of mutually parallel laser beams, thereby forming a plurality of laser light spots that are mutually parallel on the tire surface.

Specifically, the plurality of laser spots are arranged in parallel and at intervals on the tire surface, and the camera device 5 captures the plurality of laser spots. The alignment information of the tire, such as the inclination angle of the tire, is obtained by analyzing the data of the plurality of laser spots, e.g., the length, spacing, and deformation.

By adopting the above technical proposal, the camera device 5 can analyze the alignment information of the tire more easily.

In one embodiment, the number of the parallel slits ranges from 15 to 30.

Here, it can be understood that the number of parallel slits is preferably twenty-one, so that the laser element 421 projects twenty-one laser spots on the tire surface. The twenty-one laser spots facilitate the camera device 5 to calculate the laser image data, thereby analyzing the alignment information of the tire.

By adopting the above technical proposal, the parallel slits in the above number range enable the laser element 421 to form a suitable number of laser spots on the surface of the tire to be measured, thereby facilitating the acquisition and analysis of the camera device 5.

In one embodiment, the oblique support 41 includes a bottom frame 411, a vertical frame 412, and an inclined frame 413. The vertical frame 412 is vertically arranged on the bottom frame 411, and the inclined frame 413 is arranged on the vertical frame 412. The inclined frame 413 is provided with an inclined surface 4131 which is inclined at an angle to the plane where the wheel hub of the tire to be measured is located. The laser module 42 is arranged on the inclined surface 4131, so that the central axis of the laser module 42 forms a second inclination angle with the plane where the wheel hub of the tire to be measured is located.

Here, it can be understood that the bottom frame 411 is configured to support the vertical frame 412 and the inclined frame 413, and the vertical frame 412 is vertically arranged on the bottom frame 411, that is, the vertical frame 412 is disposed on and perpendicular to the bottom frame 411. The inclined frame 413 is disposed on the vertical frame 412. Additionally, the inclined frame 413 is provided with an inclined surface 4131. The inclined surface 4131 is configured to support the laser module 42 so that the laser module 42 can be in an inclined state.

Specifically, the inclined surface 4131 is inclined at an angle to the plane where the wheel hub of the tire to be measured is located. That is, the inclined surface 4131 allows the central axis of the laser module 42 to form a second inclination angle with the plane where the wheel hub of the tire to be measured is located.

By adopting the above technical proposal, the inclined arrangement of the laser module 42 is achieved.

In one embodiment, the cross-section of the vertical frame 412 is smaller than the side surface of the bottom frame 411 contacting the vertical frame 412.

By adopting the above technical proposal, the mechanical strength and light weight of the entire oblique support 41 are ensured while maintaining the height of the oblique support 41.

In one embodiment, the inclined frame 413 includes a connecting portion 4132 and a supporting portion 4133 connected to the connecting portion 4132. The connecting portion 4132 is connected to the vertical frame 412. The supporting portion 4133 is provided with an inclined surface 4131, and the supporting portion 4133 is obliquely arranged relatively to the connecting portion 4132.

Here, it can be understood that a part of the inclined frame 413 is connected to the vertical frame 412, and another part of the inclined frame 413 is configured to support the laser module 42.

By adopting the above technical proposal, the inclined frame 413 includes a connecting portion 4132 and a supporting portion 4133, so that the laser module 42 is obliquely disposed on the vertical frame 412.

In one embodiment, at least one of the bottom frame 411, the vertical frame 412 and the inclined frame 413 is provided with a cut-out 4134.

Here, it can be understood that the cut-out 4134 may be provided on the surfaces of the bottom frame 411, the vertical frame 412 and the inclined frame 413, or may be provided through the frame.

By adopting the above technical proposal, the oblique support 41 is lightweight.

In one embodiment, the bottom frame 411 is provided with a limiting groove 4111, the vertical frame 412 is inserted into the limiting groove 4111, and the wall of the limiting groove 4111 is in contact with the bottom of the vertical frame 412.

Here, it can be understood that the limiting groove 4111 is configured to limit the vertical frame 412 so that the vertical frame 412 is vertically disposed on the bottom frame 411.

Specifically, the shape and size of the limiting groove 4111 match the shape and size of the bottom of the vertical frame 412, so that the vertical frame 412 can be inserted into the limiting groove 4111, and the wall of the limiting groove 4111 is in contact with the bottom of the vertical frame 412, so that the wall of the limiting groove 4111 can apply a supporting force on the vertical frame 412.

By adopting the above technical proposal, the limiting groove 4111 limits the movement of the vertical frame 412 and allows the vertical frame 412 to be vertically disposed on the bottom frame 411.

In one embodiment, the bottom frame 411 is provided with a reinforcing rib 4112, and the reinforcing rib 4112 is located on the surface connected to the vertical frame 412.

By adopting the above technical proposal, the reinforcing rib 4112 is configured to improve the mechanical strength of the bottom frame 411, so that the supporting force exerted by the bottom frame 411 on the vertical frame 412 is greater, and the stability of the vertical frame 412 is improved.

In one embodiment, the laser device 4 further includes a laser housing 43. The laser housing 43 is covered outside the laser element 421 and has a laser opening 431.

Here, it can be understood that the laser housing 43 is configured to protect the laser element 421 and prevent the laser element 421 from being damaged.

Specifically, the laser element 421 is accommodated inside the laser housing 43. The laser housing 43 is provided with a laser opening 431. The laser opening 431 faces the light-emitting hole 4211 of the laser element 421, so that the laser produced by the laser element 421 can be emitted from the laser opening 431.

By adopting the above technical proposal, the protective performance of the laser element 421 is improved.

In one embodiment, the four-wheel alignment measuring device 100 further includes a fixing member 3. The fixing member 3 is provided at an end of the support base 1 away from the support rod 2. The fixing member 3 is configured to connect to the lift 200 carrying the vehicle.

By adopting the above technical proposal, the four-wheel alignment measuring device 100 and the lift 200 are connected, ensuring that the four-wheel alignment measuring device 100 measures the tire alignment information in a non-contact manner.

In one embodiment, the fixing member 3 is a magnetic member. The magnetic member is provided on the support base 1 and is configured to magnetically adsorb to the lift 200 carrying the vehicle.

Here, it can be understood that the magnetic member is configured to be magnetically attached on the lift 200 that carries the vehicle, so as to fix the four-wheel alignment measuring device 100 on the lift 200 that carries the vehicle. Specifically, the magnetic member is arranged on the support base 1, that is, a certain distance is provided between the magnetic member and the laser device 4 and the camera device 5. When the magnetic member is fixed on the lift 200 that carries the vehicle, since the vehicle to be measured is located on the lift 200, at this time, the position of the magnetic member on the lift 200 that carries the vehicle is adjusted so that the laser device 4 and the camera device 5 are in the correct measurement position, with a certain distance between the laser device 4 and the camera device 5 and the tire. The four-wheel alignment measuring device 100 of this embodiment utilizes a non-contact measurement method, which completely avoids contact with the tire and reduces the risk of damage to the tire and the wheel hub.

By adopting the above technical proposal, the four-wheel alignment measuring device 100 is magnetically adsorbed on the lift 200 carrying the vehicle through the magnetic member, and the four-wheel alignment measuring device 100 can be fixed without contacting the tire and the wheel hub, thereby reducing damage to the tire and the wheel hub.

In addition, the four-wheel alignment measuring device 100 is fixed by magnetic adsorption, so the operator can easily change the position of the four-wheel alignment measuring device 100. Additionally, the adjustment is less restricted, and slight displacement can be performed, which improves the accuracy of adjusting the position of the four-wheel alignment measuring device 100.

In one embodiment, the fixing member 3 is a sliding wheel disposed at the bottom of the support base 1, and the sliding wheel is configured to contact the ground of the wheel alignment site and can move relative to the ground.

By adopting the above technical proposal, the fixing member 3 allows the four-wheel alignment measuring device 100 to be placed on the ground and facilitates the movement of the four-wheel alignment measuring device 100.

In a second aspect, a four-wheel alignment apparatus is provided, which includes a lift 200 for carrying a vehicle and the above-mentioned four-wheel alignment measuring device 100. The four-wheel alignment measuring device 100 is configured to be fixed on the lift 200.

By adopting the above technical proposal, in addition to the advantages of the four-wheel alignment measuring device 100 of the above embodiments, the four-wheel alignment apparatus of this embodiment also has the advantage of enabling convenient measurement.

The above are only preferred embodiments of the present application and are not intended to limit the present application. The scope of protection of the present invention is defined by the appended claims.

## Claims

1. A four-wheel alignment measuring device, comprising:
a support base (1), a support rod (2) connected to the support base (1), and a camera device (5) arranged on the support rod (2), a lengthwise direction of the support rod (2) and a lengthwise direction of the support base (1) forming a first inclination angle; and
a laser device (4) configured to project a laser image toward a surface of a tire, and the camera device (5) being configured to acquire the laser image and obtain alignment information of the tire using the laser image;
wherein the laser device (4) is disposed on the support base (1), the laser device (4) is located on an end of the support base (1) close to the support rod (2); and the camera device (5) is located on an end of the support rod (2) away from the support base (1); and
wherein the laser device (4) includes an oblique support (41) and a laser module (42) mounted on the oblique support (41); and wherein the oblique support (41) is configured to support the laser module (42) so that a central axis of the laser module (42) and a plane where a wheel hub of the tire to be measured is located form a second inclination angle, and the laser module (42) projects the laser image from the oblique support (41) toward the surface of the tire to be measured; and the second inclination angle is ranged from 0° to 60°.

2. The four-wheel alignment measuring device according to claim 1, wherein the first inclination angle ranges from 45° to 90°.

3. The four-wheel alignment measuring device according to claim 1, wherein the support base (1) includes a support case (11) and a power supply component (12) located inside the support case (11); and wherein the support case (11) is provided with a first connection end (111) and a second connection end (112) in the lengthwise direction thereof, the first connection end (111) is configured to fix the four-wheel alignment measuring device, the second connection end (112) is configured to connect with the camera device (5) and the laser device (4), and the power supply component (12) is located inside the support case (11) at the first connection end (111) and is configured to electrically connect with the camera device (5) and the laser device (4).

4. The four-wheel alignment measuring device according to claim 1, wherein the support rod (2) includes a first support part (21) and a second support part (22) connected to the first support part (21); and wherein the first support part (21) is configured to fix the four-wheel alignment measuring device, the second support part (22) is configured to connect with the measuring device, and the second support part (22) extends from the first support part (21) in a direction away from the tire, a part of the second support part (22) that is away from the first support part (21) is configured to support the measuring device.

5. The four-wheel alignment measuring device according to claim 1, wherein the camera device (5) includes a camera housing (51), a camera main body (52) located inside the camera housing (51), and a lens (53) connected to a camera head of the camera main body (52); and wherein the camera housing (51) is provided with an accommodating cavity for accommodating the camera main body (52) and a camera opening communicating with the accommodating cavity, the lens (53) is provided in the camera opening, a convex surface is provided on a side of the lens (53) away from the camera head, and the lens (53) is configured to reduce a focal length of the camera main body (52) so as to expand a viewing angle of the camera main body (52).

6. The four-wheel alignment measuring device according to claim 1, wherein the four-wheel alignment measuring device further comprises a fixing member (3) arranged at an end of the support base (1) away from the support rod (2), and the fixing member (3) is configured to connect to a lift carrying a vehicle.

7. The four-wheel alignment measuring device according to claim 6, wherein the fixing member (3) is a magnetic member disposed on the support base (1), and the magnetic member is configured to magnetically adsorb to the lift carrying the vehicle.

8. The four-wheel alignment measuring device according to claim 6, wherein the fixing member (3) is a sliding wheel arranged at a bottom portion of the support base (1), and the sliding wheel is configured to contact a ground on which the wheel alignment is performed and is movably relative to the ground.

9. A four-wheel alignment apparatus, comprising a lift for carrying a vehicle and the four-wheel alignment measuring device according to any one of claims 1 to 6, wherein the four-wheel alignment measuring device is configured to be fixed on the lift.

## Patentansprüche

1. Vierradausrichtungsmessgerät, umfassend:
eine Stützbasis (1), ein mit der Stützbasis (1) verbundener Stützstab (2) und ein auf dem Stützstab (2) angeordnetes Kameragerät (5), wobei die Längsrichtung des Stützstabs (2) und die Längsrichtung der Stützbasis (1) einen ersten Neigungswinkel bilden; und ein Lasergerät (4), das dazu konfiguriert ist, ein Laserbild auf eine Oberfläche eines Reifens zu projizieren, und wobei das Kameragerät (5) dazu konfiguriert ist, das Laserbild zu erfassen und basierend auf dem Laserbild Ausrichtungsinformationen des Reifens zu erhalten;
wobei das Lasergerät (4) auf der Stützbasis (1) angeordnet ist, das Lasergerät (4) an einem Ende der Stützbasis (1) in der Nähe des Stützstabs (2) positioniert ist;
und das Kameragerät (5) an einem Ende des Stützstabs (2) entfernt von der Stützbasis (1) positioniert ist; und wobei das Lasergerät (4) eine schräge Stütze (41) und ein auf der schrägen Stütze (41) montiertes Lasermodul (42) einschließt;
und wobei die schräge Stütze (41) dazu konfiguriert ist, das Lasermodul (42) zu stützen, sodass eine Mittelachse des Lasermoduls (42) und eine Ebene, in der sich eine Radnabe des zu messenden Reifens befindet, einen zweiten Neigungswinkel bilden, und das Lasermodul (42) das Laserbild von der schrägen Stütze (41) auf die Oberfläche des zu messenden Reifens projiziert; und der zweite Neigungswinkel in dem Bereich von 0° bis 60° liegt.

2. Vierradausrichtungsmessgerät nach Anspruch 1, wobei der erste Neigungswinkel in dem Bereich von 45° bis 90° liegt.

3. Vierradausrichtungsmessgerät nach Anspruch 1, wobei die Stützbasis (1) ein Stützgehäuse (11) und eine innerhalb des Stützgehäuses (11) angeordnete Stromversorgungskomponente (12) einschließt; und wobei das Stützgehäuse (11) mit einem ersten Verbindungsende (111) und einem zweiten Verbindungsende (112) in seiner Längsrichtung bereitgestellt ist, das erste Verbindungsende (111) dazu konfiguriert ist, das Vierradausrichtungsmessgerät zu fixieren, das zweite Verbindungsende (112) dazu konfiguriert ist, mit dem Kameragerät (5) und dem Lasergerät (4) verbunden zu sein, und die Stromversorgungskomponente (12) innerhalb des Stützgehäuses (11) an dem ersten Verbindungsende (111) positioniert und dazu konfiguriert ist, elektrisch mit dem Kameragerät (5) und dem Lasergerät (4) verbunden zu sein.

4. Vierradausrichtungsmessgerät nach Anspruch 1, wobei der Stützstab (2) einen ersten Stützteil (21) und einen mit dem ersten Stützteil (21) verbundenen zweiten Stützteil (22) einschließt; und wobei der erste Stützteil (21) dazu konfiguriert ist, das Vierradausrichtungsmessgerät zu fixieren, der zweite Stützteil (22) dazu konfiguriert ist, mit dem Messgerät zu verbinden, und sich der zweite Stützteil (22) von dem ersten Stützteil (21) in einer Richtung weg von dem Reifen erstreckt, ein Teil des zweiten Stützteils (22), der von dem ersten Stützteil (21) entfernt ist, dazu konfiguriert ist, das Messgerät zu stützen.

5. Vierradausrichtungsmessgerät nach Anspruch 1, wobei das Kameragerät (5) ein Kameragehäuse (51), einen innerhalb des Kameragehäuses (51) angeordneten Kamerahauptkörper (52) und ein mit einem Kamerakopf des Kamerahauptkörpers (52) verbundenes Objektiv (53) einschließt; wobei das Kameragehäuse (51) mit einem Aufnahmeraum zum Aufnehmen des Kamerahauptkörpers (52) und einer mit dem Aufnahmeraum in Kommunikation stehenden Kameraöffnung bereitgestellt ist, die Linse (53) in der Kameraöffnung bereitgestellt ist, eine konvexe Oberfläche auf einer von dem Kamerakopf entfernten Seite der Linse (53) bereitgestellt ist und die Linse (53) dazu konfiguriert ist, eine Brennweite des Kamerahauptkörpers (52) zu verringern, um einen Betrachtungswinkel des Kamerahauptkörpers (52) zu erweitern.

6. Vierradausrichtungsmessgerät nach Anspruch 1, wobei das Vierradausrichtungsmessgerät ferner ein Befestigungselement (3) umfasst, das an einem Ende der Stützbasis (1) entfernt von dem Stützstab (2) angeordnet ist, und das Befestigungselement (3) dazu konfiguriert ist, mit einer ein Fahrzeug tragenden Hebebühne zu verbinden.

7. Vierradausrichtungsmessgerät nach Anspruch 6, wobei das Befestigungselement (3) ein auf der Stützbasis (1) angeordnetes magnetisches Element ist und das magnetische Element dazu konfiguriert ist, magnetisch an der das Fahrzeug tragenden Hebebühne zu haften.

8. Vierradausrichtungsmessgerät nach Anspruch 6, wobei das Befestigungselement (3) ein Gleitrad ist, das an einem unteren Abschnitt der Stützbasis (1) angeordnet ist, und das Gleitrad dazu konfiguriert ist, mit einem Boden zu kontaktieren, auf dem die Radausrichtung durchgeführt wird, und relativ zu dem Boden beweglich ist.

9. Vierradausrichtungsvorrichtung, umfassend eine Hebebühne zum Tragen eines Fahrzeugs und das Vierradausrichtungsmessgerät nach einem der Ansprüche 1 bis 6, wobei das Vierradausrichtungsmessgerät dazu konfiguriert ist, an der Hebebühne befestigt zu werden.

## Revendications

1. Dispositif de mesure d'alignement à quatre roues, comprenant :
une base de support (1), une tige de support (2) reliée à la base de support (1), et
un dispositif de caméra (5) disposé sur la tige de support (2), une direction longitudinale de la tige de support (2) et une direction longitudinale de la base de support (1) formant un premier angle d'inclinaison ; et un dispositif laser (4) configuré pour projeter une image laser vers la surface d'un pneu, et le dispositif de caméra (5) étant configuré pour acquérir l'image laser et obtenir des informations d'alignement du pneu à l'aide de l'image laser ;
dans lequel le dispositif laser (4) est disposé sur la base de support (1), le dispositif laser (4) est situé sur une extrémité de la base de support (1) proche de la tige de support (2) ; et le dispositif de caméra (5) est situé sur une extrémité de la tige de support (2) éloignée de la base de support (1) ; et dans lequel le dispositif laser (4) comprend un support oblique (41) et un module laser (42) monté sur le support oblique (41) ; et dans lequel le support oblique (41) est configuré pour supporter le module laser (42) de sorte qu'un axe central du module laser (42) et un plan où se trouve un moyeu de roue du pneu à mesurer forment un second angle d'inclinaison, et le module laser (42) projette l'image laser du support oblique (41) vers la surface du pneu à mesurer ; et le second angle d'inclinaison est compris entre 0° et 60°.

2. Dispositif de mesure d'alignement à quatre roues selon la revendication 1, dans lequel le premier angle d'inclinaison est compris entre 45° et 90°.

3. Dispositif de mesure d'alignement à quatre roues selon la revendication 1, dans lequel la base de support (1) comprend un boîtier de support (11) et un composant d'alimentation électrique (12) situé à l'intérieur du boîtier de support (11) ; et dans lequel le boîtier de support (11) est pourvu d'une première extrémité de connexion (111) et d'une seconde extrémité de connexion (112) dans le sens de la longueur, la première extrémité de connexion (111) est configurée pour fixer le dispositif de mesure d'alignement à quatre roues, la seconde extrémité de connexion (112) est configurée pour se connecter au dispositif de caméra (5) et au dispositif laser (4), et le composant d'alimentation électrique (12) est situé à l'intérieur du boîtier de support (11) au niveau de la première extrémité de connexion (111) et est configuré pour se connecter électriquement au dispositif de caméra (5) et au dispositif laser (4).

4. Dispositif de mesure d'alignement à quatre roues selon la revendication 1, dans lequel la tige de support (2) comprend une première partie de support (21) et une seconde partie de support (22) reliée à la première partie de support (21) ; et dans lequel la première partie de support (21) est configurée pour fixer le dispositif de mesure d'alignement à quatre roues, la seconde partie de support (22) est configurée pour se connecter au dispositif de mesure, et la seconde partie de support (22) s'étend à partir de la première partie de support (21) dans une direction opposée au pneu, une partie de la seconde partie de support (22) qui est opposée à la première partie de support (21) est configurée pour soutenir le dispositif de mesure.

5. Dispositif de mesure d'alignement à quatre roues selon la revendication 1, dans lequel le dispositif de caméra (5) comprend un boîtier de caméra (51), un corps principal de caméra (52) situé à l'intérieur du boîtier de caméra (51), et un objectif (53) relié à une tête de caméra du corps principal de caméra (52) ; et dans lequel le boîtier de caméra (51) est pourvu d'une cavité de logement pour loger le corps principal de caméra (52) et d'une ouverture de caméra communiquant avec la cavité de logement, l'objectif (53) est fourni dans l'ouverture de caméra, une surface convexe est fournie sur un côté de l'objectif (53) éloigné de la tête de caméra, et l'objectif (53) est configuré pour réduire une longueur focale du corps principal de caméra (52) de manière à élargir un angle de vue du corps principal de caméra (52).

6. Dispositif de mesure d'alignement à quatre roues selon la revendication 1, dans lequel le dispositif de mesure d'alignement à quatre roues comprend en outre un élément de fixation (3) disposé au niveau d'une extrémité de la base de support (1) éloignée de la tige de support (2), et l'élément de fixation (3) est configuré pour se connecter à un pont élévateur transportant un véhicule.

7. Dispositif de mesure d'alignement à quatre roues selon la revendication 6, dans lequel l'élément de fixation (3) est un élément magnétique disposé sur la base de support (1), et l'élément magnétique est configuré pour s'adsorber magnétiquement au pont élévateur transportant le véhicule.

8. Dispositif de mesure d'alignement à quatre roues selon la revendication 6, dans lequel l'élément de fixation (3) est une roue coulissante disposée dans une partie inférieure de la base de support (1), et la roue coulissante est configurée pour entrer en contact avec un sol sur lequel l'alignement à roues est effectué et est mobile par rapport au sol.

9. Appareil de réglage d'alignement à quatre roues, comprenant un pont élévateur pour transporter un véhicule et le dispositif de mesure d'alignement à quatre roues selon l'une quelconque des revendications 1 à 6, dans lequel le dispositif de mesure d'alignement à quatre roues est configuré pour être fixé sur le pont élévateur.
